# EUROPEAN PATENT APPLICATION

(11) **EP 4 403 538 A1**
(43) Date of publication of application: **24.07.2024**
(21) Application number: 24151119.5
(22) Date of filing: 10.01.2024
(51) Int. Cl.: C04B 41/52, C04B 41/50, C04B 41/00, C04B 41/87, C04B 41/89, B28B 11/04

(54) **PROCESS AND PLANT FOR MANUFACTURING CERAMIC PRODUCTS**

(30) Priority: 20.01.2023 IT 202300000825
(71) Applicant: Industrie Ceramiche Piemme S.p.A., 41042 Fiorano Modenese (MO) (IT)
(72) Inventor: FIORINO, Flavia, 41043 FORMIGINE (MO) (IT)
(74) Representative: Corradini, Corrado

(57) **Abstract**

A process and a plant for manufacturing ceramic products, for example ceramic slabs and tiles are described, wherein the process comprising the steps of: preparing a soft layer (100) of ceramic powder, pressing said soft layer (100) to obtain a substrate (105) of compacted ceramic powder, applying a ceramic slip (115) differentially to at least one surface (110) of said substrate (105) by digital printing, and firing the substrate (105), for example inside a ceramic kiln (230), after the application of the slip (115).

## Description

### Technical field

The present invention concerns a process and a plant for manufacturing a ceramic product, for example large format coating tiles or slabs.

### State of the art

As is known, the manufacture of the ceramic tiles and slabs provides for a series of steps that are carried out in succession, the main of which are:
- grinding,
- atomization,
- pressing or compaction,
- drying,
- decoration and coating,
- firing,
- end-of-line processing.

With regard to the decoration and coating steps, the currently most popular processes provide for applying to the pressed and dried ceramic slab or tile a ceramic engobe and, subsequently, one or more ceramic inks suitable for making a graphic.

These ceramic inks are often applied by digital inkjet printing machines which, thanks to their high flexibility, allow complex and varied decorations to be made, without requiring the adoption of complicated equipment and/or long production stops in the event of changes of the graphics.

As regards the surface structure, applied to the ceramic product, the state of the art currently provides for the use of a series of pads mounted inside the press.

The pads are components of the pressing system capable of imprinting the structure on the piece being compacted, directly on the soft powder.

With this method the number of three-dimensional structures obtainable is very limited, as the diversification of such structures is equal to the number of different pads that can be mounted on the traditional presses (usually no more than 4 or 5).

In order to make a diversified relief structure, processes have recently been experimented which, after the application of the engobe and before the application of the ceramic inks, provides for applying a ceramic glaze to the pressed and dried ceramic slab or tile.

This ceramic glaze is applied only in preset areas of the slab or tile itself, in order to create reliefs that give the slab or tile a three-dimensional surface structure, capable, for example, of more closely mimicking the texture of natural stone with a potentially infinite diversification.

To allow the realization of different types of textures in a flexible way, the ceramic glaze is also preferably applied by digital printers, which have required the development of ceramic glazes with technical characteristics designed ad hoc for the application through the nozzles of a digital printer.

These digital printers for the application of glaze (also called digital glazers) can operate in total synchronization with the digital printers that deal with the application of the ceramic inks, in order to obtain a perfect match between the structure and the graphics and produce three-dimensional effects that make the ceramic tiles or slabs extremely realistic and difficult to distinguish, visually and tactilely, from natural materials such as wood, stone and marble.

A limit of this technology of application of structure through digital printing, however, consists in that the material (glaze) that forms the voluminous layer adapted to confer the three-dimensional structure is not similar to the material (ceramic powder) that constitutes the pressed or compacted slab or tile.

This discrepancy entails that, despite the subsequent firing step, the two materials may have not intimately adhered and may still form two structurally distinct layers that make the final ceramic slab or tile relatively more fragile.

The glazes for digital applications are mainly composed of frits, which are obtained by melting specific mixtures of raw materials through melting furnaces and subsequently subjected to a wet grinding step.

A limit is therefore represented by the low degree of chemical and physical homogeneity of the frits, since during grinding in aqueous suspension ion transfer phenomena can occur that become relevant when the glassy structure of the frits is not very stable and can give rise to variations in the rheological properties during the application of the glazes. In order for the glazes to be suitable for a digital application, it is therefore necessary that the parameters of viscosity, surface tension, density, solid content, etc. are scrupulously checked, making them very similar to those typical of the ceramic inks.

From this it follows that, in addition to making the ceramic slab or tile structurally more fragile due to their different composition, the glazes for digital applications are relatively expensive products that increase the overall cost of the manufacturing process.

### Disclosure of the invention

In light of the foregoing, an object of the present invention consists in solving or at least significantly mitigating the aforementioned limitations of the prior art.

Another object is to achieve the aforesaid objective in the context of a simple, rational and relatively low-cost solution.

These and other objects are reached thanks to the characteristics of the invention that are set forth in the independent claims. The dependent claims outline preferred and/or particularly advantageous aspects of the invention but not strictly necessary for implementing it.

In particular, one embodiment of the invention makes available a process for manufacturing ceramic products, for example ceramic tiles or slabs, comprising the steps of:
- preparing a soft layer of ceramic powder,
- pressing said soft layer to obtain a substrate of compacted ceramic powder (also called raw or green substrate), typically having a planar shape,
- differentiated application of a ceramic slip on at least one surface of said substrate,
- firing the substrate, after applying the slip.

The term "differentiated" means that the slip is not applied to the substrate of compacted ceramic powder in a uniform manner, that is, to make a constant-thickness layer on its surface that covers it entirely.

On the contrary, it is meant that the slip is applied in different quantities in different areas or portions of the surface of the substrate.

For example, the ceramic slip can be applied only to one or more portions of the surface of the substrate, so that the latter is not completely covered (i.e. so as to leave one or more other portions of said surface uncovered by the slip).

Or, the ceramic slip could be applied over the entire surface of the substrate but with a higher concentration in some areas or portions than others.

In this way, it is advantageously possible to make on the ceramic product, for example on the ceramic slab or tile, a relief structure using a ceramic slip instead of the ceramic glazes used in the digital glazing technology.

In all cases, the slip will preferably be applied so as to draw a relief structure according to a defined graphic.

Since the ceramic slip is essentially composed of the same raw materials that also make up the ceramic powder of the soft layer, this process makes sure that, following the firing step, these raw materials melt together, creating a perfectly adhered structure.

The ceramic slip is also a relatively inexpensive product that allows to reduce the production costs.

According to a preferred aspect of the invention, the ceramic slip can be applied by digital technology, i.e. by a technology that can be defined as a "digital printing" of the raw substrate with slip (instead of with ceramic inks).

In fact, by digital technology it is intended to mean that the ceramic slip is applied to the raw substrate by means of a machine that generally comprises one or more dispensing heads provided with a relative movement with respect to the substrate itself (i.e. that move with respect to the substrate and/or with respect to which the substrate moves), each of which is enslaved to a digital electronic control system that operates it in a selective, controlled and coordinated manner with the relative movements with respect to the substrate, so that on the latter dosed quantities of slip are dispensed according to a preset pattern (e.g. scheme or graphic model), which can be set in the control system of the machine for example through a graphic file.

These machines can be digital jet (slip) printers, technologically similar to the digital inkjet printers but appropriately structured/adapted to allow dispensing the slip instead of the common ceramic inks.

This solution gives great flexibility to the process, which can be advantageously used to make tiles with complex and varied relief structures, with great precision and without requiring the adoption of complicated equipment and/or long production stops in the event of changes in the geometries of the reliefs.

In other words, thanks to the use of digital printing, it is possible to apply the slip according to an extremely diversified graphic between one production batch and another in a very simple and fast way, thus allowing the production of even relatively small batches. Another aspect of the invention provides that the process may comprise the step of applying a ceramic ink to said surface of said substrate, after the step of applying the slip and before the firing step.

In this way, it is advantageously possible to overlap the relief structure with graphics, for example coloured graphics, which may be fitted to and/or overlap the reliefs, for example to make extremely realistic ceramic tiles or slabs that are difficult to distinguish visually and tactilely from natural materials such as wood, stone and marble.

To allow the realization of different types of graphics in a flexible and precise way, the application of ceramic ink is also preferably carried out by digital printing.

According to another aspect of the invention, the process may also comprise the step of applying a ceramic engobe to said surface of said substrate, after the step of applying the slip and before the step of applying the ceramic ink.

This ceramic engobe has the function of closing the pores of the surface of the substrate, making it at the same time less permeable to the ceramic inks that can therefore create more defined graphics at the surface.

Another aspect of the invention provides that the process may comprise a step of drying the substrate, between the step of applying the slip and the firing step, for example, before applying the ceramic ink and/or before applying the engobe.

This step allows the slip to dry together with the underlying green substrate, in order to obtain a compact solid phase, composed of the substrate and the relief structure thereof. In this way, the soft layer is formed by substantially homogeneous ceramic powder with almost constant humidity, which is particularly suitable for the subsequent processing steps.

Another aspect of the invention provides that the pressing step can be carried out by continuous pressing, i.e. by compacting the soft layer of ceramic powder in continuous advancement between two compacting surfaces, for example belts or rollers.

This pressing system is in fact particularly flexible and suitable to be carried out in line with high productivity.

According to another aspect of the invention, the ceramic slip that is applied to the substrate of compacted ceramic powder may comprise a solid phase and a liquid phase, each of which is present in a proportion comprised between 30% and 70% of the total weight of said slip.

This composition of the slip makes it particularly suitable for effectively making the relief structures on the substrate of compacted ceramic powder.

For the same reason, another aspect of the invention provides that the slip may have a density comprised between 1400 g/L and 1500 g/L.

The present invention also makes available a plant for manufacturing ceramic products, for example ceramic tiles or slabs, comprising:
- a device for preparing a soft layer of ceramic powder,
- a ceramic press for pressing said soft layer and obtaining a substrate of compacted ceramic powder, typically having a planar shape,
- a digital technology device for applying a ceramic slip differentially, typically according to a defined graphic, to at least one surface of said substrate,
- a ceramic kiln for firing said substrate, after the application of the slip.

This embodiment of the invention substantially achieves the same effects as the method outlined above, in particular that of making ceramic products, for example ceramic tiles or slabs, which have a three-dimensional relief structure obtained with a ceramic slip and not with a ceramic glaze.

All ancillary aspects of the invention that have been previously outlined with reference to the method are applicable, *mutatis mutandis,* also to the relative plant.

For example, the device for applying the slip to the substrate of compacted ceramic powder may preferably be a digital printer.

### Brief description of the drawings

Further features and advantages of the invention will be more apparent after reading the following description provided by way of a non-limiting example, with the aid of the accompanying drawings.

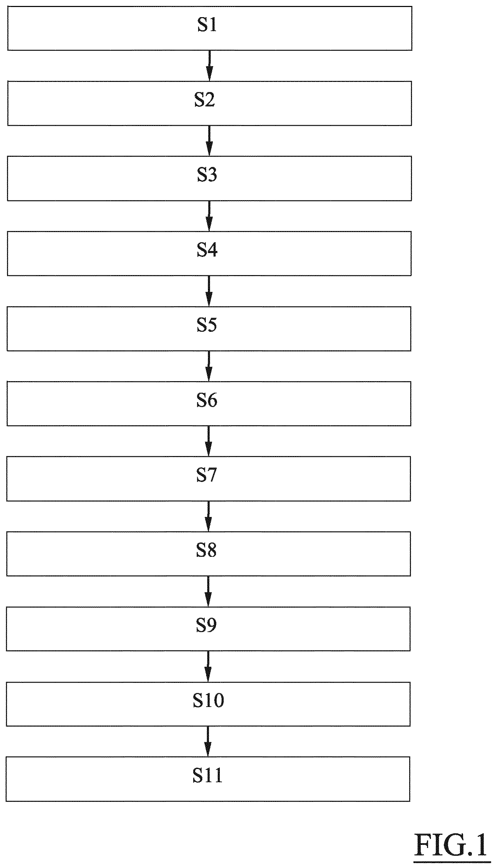

Figure 1 is a flowchart reporting the steps of a process according to an embodiment of the invention.
Figures from 2a to 2h schematically illustrate as many of the aforementioned steps.

### Detailed description

The process for manufacturing ceramic products, such as for example large-sized ceramic tiles or slabs, first of all provides for preparing a mix of ceramic raw materials.

This mix includes clay or a mixture of clays of various kinds, to which one or more components chosen from: feldspathic minerals (e.g. sodium and/or sodium-potassium feldspars), sands, granites, talc, silica, kaolins, carbonates, mica and glassy materials can possibly be added.

Subsequently, this mix of ceramic raw materials can be subjected to a grinding step S1. The mix of ceramic raw materials can be dry-ground, obtaining directly, or through further processing steps, a ceramic powder suitable for manufacturing ceramic products, such as for example ceramic tiles and slabs.

Alternatively and more preferably, the mix of ceramic raw materials may be wet-ground and then subjected to a spray-drying step S2.

In this case, a ceramic powder is obtained which is called "atomized powder" or simply "atomized matter".

Wet grinding of the mix of ceramic raw materials can take place inside special rotary mills until a liquid and viscous mixture is obtained, commonly referred to as a slip.

The slip thus produced can then be introduced in special spray dryers, called atomizers, which are able to produce a homogeneous powder with constant humidity, i.e. the atomized powder, ready for the further processing steps.

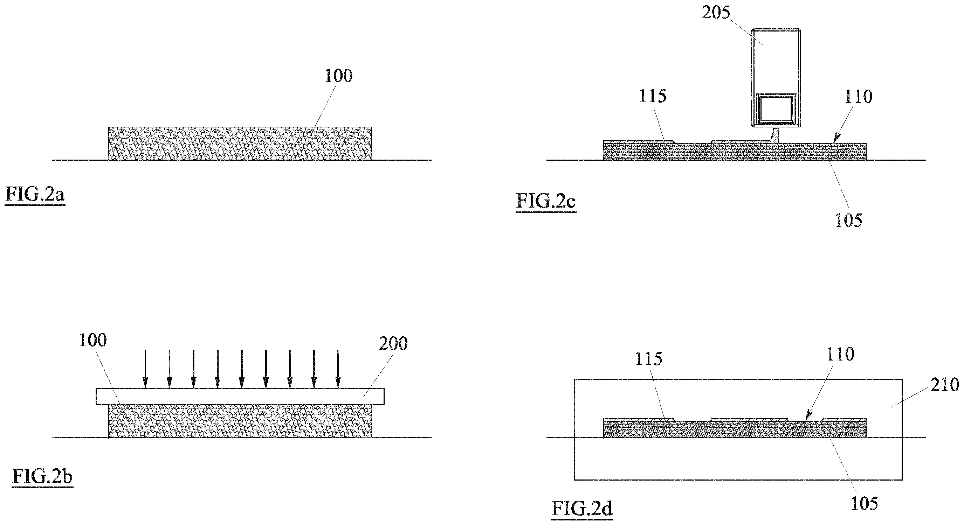

These further processing steps can start with the distribution (step S3) of the ceramic powder (e.g. atomized) on a substrate surface, so as to obtain a soft layer 100 (i.e. not pressed) which is substantially flat and with preset thickness (see fig. 2a). Subsequently, the soft layer 100 of ceramic powder can be subjected to a pressing step S4, so as to obtain a substrate 105 of compacted ceramic powder, generally having a planar shape, also referred to as raw or green substrate (see in comparison fig. 2b and fig. 2c).

The pressing step S4 can be performed by any ceramic press 200, for example of a discontinuous type or, more preferably, of a continuous type.

In the continuous presses, the soft layer 100 of ceramic powder is pressed by advancing it continuously between two compacting surfaces, for example belts or rollers, normally but not necessarily without lateral containment, and subsequently cutting the compacted layer so as to obtain the substrate 105 of the desired size.

Regardless of the press used, the pressure with which the soft layer 100 is pressed may vary depending on the ceramic powders used, typically from a minimum of 150 kg/cm² (kilograms per square centimetre) to a maximum of 600 kg/cm².

For example, in the case of porcelain stoneware, the pressure exerted on the soft layer 100 can be comprised between 350 kg/cm² and 450 kg/cm².

After pressing, the process comprises a step S5 which provides for applying ceramic slip 115, unevenly but typically according to a defined graphic, to at least one surface 110 of the substrate 105 (s. fig. 2c).

The wording "unevenly" means that the slip 115 is applied in different quantities in the different areas or portions of the surface 110 of the substrate 105, typically according to a graphic defined by a graphic file.

For example, the slip 115 can be applied only to one or more limited portions of the surface 110 of the substrate 105, so that the latter is not completely covered (i.e. so as to leave one or more other portions of said surface 110 uncovered by the slip).

Or, the slip 115 may be applied over the entire surface 110 of the substrate 105 but with a higher concentration in some areas or portions than others.

In this way, it is advantageously possible to make with the slip 115 a relief structure (or texture) that rises from the surface 110 of the substrate.

In any case, the slip 115 is preferably applied so as to draw a relief structure according to a preset graphic, which can be defined by an appropriate graphic file.

As anticipated, the slip 115 is a heterogeneous mixture (or dispersion) comprising at least a liquid phase and a solid phase, wherein the liquid phase mainly comprises water and/or organic liquids and the solid phase comprises a mix of ground ceramic raw materials. Preferably, in the slip 115, the solid phase and the liquid phase are individually present in a proportion comprised between 30% and 70% of the total weight of the slip 115 itself. The density of the slip 115 is preferably comprised between 1400 g/L and 1500 g/L. The mix of ceramic raw materials used for the slip 115 is generally of the same kind/type as the one used to obtain the starting ceramic powder, although its composition may be different.

In other words, the mix of ceramic raw materials of the slip 115 can comprise clay or a mixture of clays of various kind, to which one or more components chosen from: feldspathic minerals (e.g. sodium and/or sodium-potassium feldspars), sands, granites, talc, silica, kaolins, carbonates, micas and glassy materials can be added.

In this way, the slip 115 that is applied to the substrate 105 is a slip from a mixture that could also be used to obtain the starting ceramic powder or that, in any case, would be suitable to be used also for that purpose.

Also the slip 115 can be obtained by means of a step of wet grinding the mix of ceramic raw materials, for example inside special rotary mills.

The application of the slip 115 to the substrate 105 is preferably carried out by digital technology, i.e. by "digital printing".

In other words, the slip 115 may be applied to the substrate 105 by a digital printer 205.

By digital printer is intended to mean a printing machine provided with suitable printheads which, similarly to the printheads of the paper printers, are capable of dispensing, for example by jet or spraying, drops of slip 115 on the surface 110 of the substrate 105, in a controlled manner and following a preset graphic or drawing.

A machine of this type can be similar to a conventional digital inkjet printer for ceramic inks or, preferably, to a conventional digital ceramic glazer, of the type of those already used for the digital application of the ceramic glazes.

For example, digital ceramic glazers have already been designed whose heads are provided with nozzles capable of producing a controlled and variable jet of ceramic glazes with high grain size (e.g. greater than 45 microns) and high viscosity.

Digital glazers of this type can therefore be advantageously used, optionally with some small adaptations/expedients, also to dispense the slip 115 according to this process.

In any case, by applying the slip 115 through the use of digital printers/glazers 205 it is advantageously possible to make substrates 105 with complex and varied relief structures, with great precision and without requiring the adoption of complicated equipment and/or long production stops in the event of changes in the geometries of the reliefs. After the application of the slip, the substrate 105 can possibly be subjected to a drying step S6, during which it is heated to moderate temperatures inside a dryer 210 in order to reduce the humidity present in the pressed ceramic powder and in the slip 115 (see fig. 2d).

This step S6 allows the slip 115 to dry together with the underlying green substrate, so as to obtain a compact solid phase, composed of the substrate and the relief structure thereof.

Thereafter, the process may also comprise a possible step S7 which provides for applying to the surface 110 of the substrate 105 a ceramic engobe 120, which generally has the function of occluding the pores of the surface, making it at the same time less permeable to liquids.

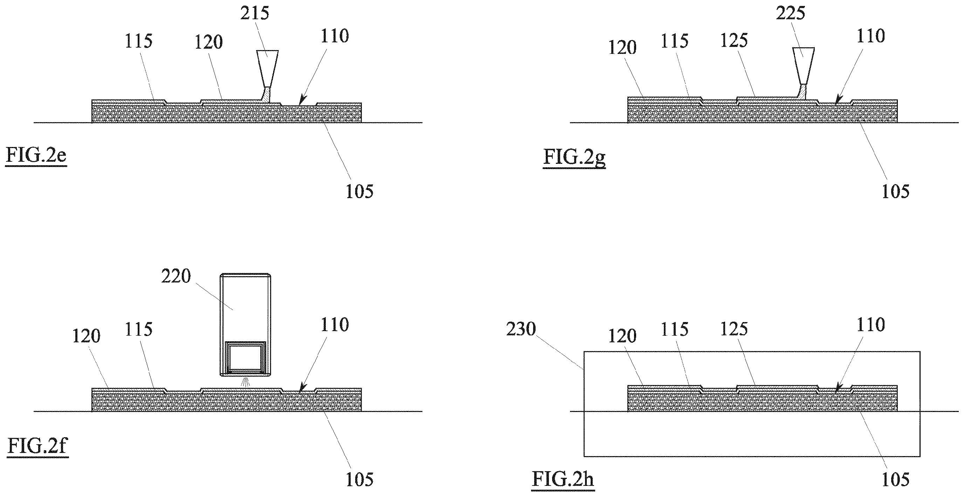

The ceramic engobe 120 can be applied by means of an airless applicator 215 or any other suitable device (see fig. 2e).

After the possible application of the engobe, one or more ceramic inks adapted to make a decoration can be applied to the surface 110 of the substrate 105 (already at least partially covered with the slip 115) (step S8).

In this way it is advantageously possible to overlap the obtained relief structure with the slip 115 of the graphics, for example coloured graphics, which may be fitted to and/or overlap the reliefs, for example to make extremely realistic ceramic tiles or slabs that are difficult to distinguish visually and tactilely from natural materials such as wood, stone and marble.

To increase the range of realizable decorations and the versatility of the decoration process, also the ceramic inks can be applied by digital printing, i.e. using one or more digital ceramic printers 220, for example of the inkjet type, i.e. that implement an ink-jet technology (see fig. 2f).

Each ceramic ink generally consists of a suspension, that is, of a mixture consisting of a solid material finely subdivided and dispersed in another material in the liquid state, typically in such a way as not to settle in a short time.

The solid material present in the solution generally takes the name of solid fraction, whereas the material in the liquid state generally takes the name of liquid fraction or carrier.

In the case of ceramic inks, the solid fraction of the solution has an inorganic nature while the liquid fraction consists of water and/or other liquids of organic nature.

The solid fraction can comprise, for example, coloured calcines and inorganic pigments, adapted to give the ceramic ink the desired colour, to which frits of various kinds and/or other inorganic oxides of varying refractory properties can possibly be added, in order to obtain on the ceramic object various material effects, including the glossy effect, the devitrified effect, the matt effect, the metallic effect, the sinking effect and the like.

With regard to the liquid fraction, the main organic components currently used in the ceramic inks may be instead grouped into the following classes of organic substances: glycols, glycol ethers, esters derived from fatty acids, paraffins and naphthenes.

After the application of the ceramic inks, the surface 110 may optionally be covered with a further layer 125 of a covering ceramic glaze (step S9), preferably transparent, which generally has the effect of protecting the obtained decoration with the ceramic inks from oxidations, water and acids.

The ceramic glaze mainly consists of glassy frits, i.e. semi-finished products obtained by melting specific mixtures of raw materials, mainly silica ones, inside suitable melting furnaces, which are allowed to solidify and then subjected to a wet grinding step at the time of preparation of the glaze.

The ceramic glaze can be applied by an airless applicator 225 or any other suitable device (see fig. 2g).

Once the decoration is completed, the substrate 105 of pressed and decorated ceramic powder is subjected to a firing step S10, typically inside a ceramic kiln 230 (see fig. 2h), so as to obtain the finished ceramic slab or tile.

This firing step S10 generally provides for heating the substrate 105 according to a set heating curve, until it is brought to a preset maximum temperature, which can vary between 550 °C and 1400 °C depending on the composition of the ceramic powder of the substrate, and maintaining it at said maximum temperature for a given time, before cooling it.

Once the firing step S10 is completed, the finished ceramic slab or tile can possibly be subjected to mechanical machining (step S11), for example grinding and/or internal machining.

Obviously, a person skilled in the art will be able to make numerous technical-applicative modifications to all that above, without thereby departing from the scope of the invention as hereinbelow claimed.

## Claims

1. A process for manufacturing ceramic products, comprising the steps of:
- preparing a soft layer (100) of ceramic powder,
- pressing said soft layer (100) to obtain a substrate (105) of compacted ceramic powder,
- differentiated application of a ceramic slip (115) on at least one surface (110) of said substrate (105) by digital technology,
- firing the substrate (105) inside a ceramic kiln (230), after applying the slip (115).

2. A process according to claim 1, wherein the ceramic slip (115) is applied by a digital printer.

3. A process according to any one of the preceding claims, comprising the step of applying a ceramic ink to said surface (110) of said substrate (105), after the step of applying the slip (115) and before the firing step.

4. A process according to claim 3, wherein the ceramic ink is applied by digital printing.

5. A process according to claim 3 or 4, comprising the step of applying a ceramic engobe (120) to said surface (110) of said substrate (105), after the step of applying the slip (115) and before the step of applying the ceramic ink.

6. A process according to any one of the preceding claims, comprising the step of subjecting the substrate (105) to a drying step, between the step of applying the slip (115) and the firing step.

7. A process according to any one of the preceding claims, wherein the pressing step is carried out by continuous pressing.

8. A process according to any one of the preceding claims, wherein the ceramic slip (115) comprises a solid phase and a liquid phase, each of which is present in a proportion comprised between 30% and 70% of the total weight of said slip (115).

9. A process according to any one of the preceding claims, wherein the slip (115) has a density comprised between 1400 g/L and 1500 g/L.

10. A plant for manufacturing ceramic products comprising:
- a device for preparing a soft layer (100) of ceramic powder,
- a ceramic press (200) for pressing said soft layer (100) and obtaining a substrate (105) of compacted ceramic powder,
- a digital technology device (205) for applying a ceramic slip (115) differentially to at least one surface (110) of said substrate (105),
- a ceramic kiln (230) for firing said substrate (105), after the application of the slip (115).
